# EUROPÄISCHE PATENTSCHRIFT

(11) **EP 1 107 164 B1**
(45) Veröffentlichungstag und Bekanntmachung des Hinweises auf die Patenterteilung: **22.08.2007**
(21) Anmeldenummer: 00122578.8
(22) Anmeldetag: 17.10.2000
(51) Int. Cl.: G06K 7/01, G06K 7/00

(54) **Kartenlesevorrichtung**
Card reading device
Dispositif de lecture de cartes

(30) Priorität: 10.12.1999 DE 19959464
(43) Veröffentlichungstag der Anmeldung: 13.06.2001
(73) Patentinhaber: National Rejectors, Inc. GmbH, 21614 Buxtehude (DE)
(72) Erfinder: Frerichs, Arnold, 21614 Buxtehude (DE); Glück, Anton, 21698 Harsefeld (DE); Heuer, Burkhard, 21709 Himmelpforten (DE)
(74) Vertreter: Hauck Patent- und Rechtsanwälte

(56) Entgegenhaltungen:
- WO-A-98/57290
- DE-A- 3 032 686
- DE-A- 19 738 412
- DE-U- 8 712 368
- US-A- 5 398 157

## Beschreibung

Die Erfindung bezieht sich auf eine Kartenlesevorrichtung nach dem Oberbegriff des Patentanspruchs 1

Kartenlesevorrichtungen sind üblicherweise an einer Tür eines Automaten oder dergleichen angebracht. Sie weisen einen Einsteckschlitz für eine Karte auf, der durch eine Schutzklappe verschlossen sein kann. Auf der Rückseite der Wand ist eine Leseeinheit angebracht. Sie nimmt die Karte während des Leseprozesses auf und enthält entsprechende Abtastmittel. Die Leseeinheit ist mit einer Steuereinheit verbunden, welche die von der Leseeinheit kommenden Signale verarbeitet, z.B. die Karte identifiz ert und den Speicherinhalt abliest und ggf. einen Betrag abbucht usw.

Aus DE 197 38 412 ist eine Kartenlesevorrichtung bekannt geworden, bei der eine getrennte Schlitzeinheit vorgesehen ist, die an der Vorderseite der Wand montiert wird und mit sich nach hinten erstreckenden Ansätzen durch die Öffnung in der Wand hindurch geführt ist. Die Ansätze greifen in Fassungsabschnitte eines Trägers für die Leseeinheit und werden über eine lösbare, ein federnd vorgespanntes Verriegelungselement aufweisende Schnappverbindung verbunden werden. Für den Ausbau der Leseeinheit zwecks Austausch oder Wartung braucht sie lediglich von dem rückwärtigen Teil der Schlitzeinheit gelöst zu werden. Die Schlitzeinheit kann an der Wand verbleiben.

Aus DE 30 32 686 A ist eine Kartenlesevorrichtung bekannt geworden, bei der eine annähernd trapezoide Konsole gegen eine Wand gesetzt ist die eine aufklappbare Tür aufweist, in der ein Schlitz zum Einschieben einer Karte geformt ist. An der Türrückseite ist durch Verschraubung eine Aufnahme angebracht, in die eine kassettenartige Anordnung der Leseeinheit einschiebbar ist. Die Aufnahme enthält zwei federvorgespannte Verriegelungselemente, um die Kassette in der Aufnahme zu verriegeln.

Der Erfindung liegt die Aufgabe zugrunde, eine Kartenlesevorrichtung zu schaffen, bei der die Leseeinheit auf besonders einfache Weise ohne Werkzeuge von Hand von der Schlitzeinheit gelöst werden kann. Diese Aufgabe wird durch die Merkmale des Patentanspruchs 1 gelöst.

Bei der Erfindung wirkt wie im bekannten Fall zwischen mindestens einem Ansatz und mindestens einem mit dem Ansatz teleskopisch zusammenwirkenden Abschnitt der Leseeinheit ein federnd vorgespanntes Verriegelungselement, das mit einem Verriegelungsabschnitt zusammenwirkt.

Erfindungsgemäß ist seitlich der Leseeinheit ist ein längliches Betätigungselement angeordnet mit einer hinteren Handhabe zur Betätigung des Verriegelungselements zwecks Außereingriffbringens mit dem Verriegelungsabschnitt. Vorzugsweise ist auf jeder Seite der Leseeinheit ein Betätigungselement angeordnet, und jedes Betätigungselement wirkt auf ein Verriegelungselement. Die Ansätze der Schlitzeinheit werden vorzugsweise von Fassungsabschnitten der Leseeinheit aufgenommen.

Bei der Erfindung kann die Entriegelung auf einfache Weise von Hand im hinteren Bereich der Leseeinheit vorgenommen werden. Komplizierte und zeitraubende Manipulationen, die eventuell auch Werkzeuge erfordern, sind mithin nicht erforderlich.

Es sind verschiedene Verriegelungs- bzw. Entriegelungsmechanismen denkbar. Bei einer Ausgestaltung der Erfindung ist das Verriegelungselement der Fassung zugeordnet und wirkt mit einer Ausnehmung des Ansatzes zusammen. Nach einer weiteren Ausgestaltung der Erfindung ist das Verriegelungselement einteilig mit einem Entriegelungshebel geformt, der nahe dem hinteren Ende schwenkbar an der Leseeinheit gelagert ist. Um das Verriegelungselement in wirksamem Eingriff mit dem Verriegelungsabschnitt zu halten, wäre bei einer solchen Ausführungsform eine zusätzliche Feder vorzusehen, welche das Verriegelungselement in Richtung Verriegelungsabschnitt vorspannt. Eine solche Feder kann in Fortfall kommen, wenn nach einer weiteren Ausgestaltung der Erfindung der Entriegelungshebel mit seinem das Verriegelungselement tragenden Arm als Flachfeder ausgebildet ist, die mit einem Gegenlager der Leseeinheit derart zusammenwirkt, dass die Flachfeder bei Betätigung des Entriegelungshebels nach außen gebogen wird unter Wegschwenken einer Verriegelungsnase aus der Ausnehmung. Diese Ausgestaltung hat den weiteren Vorteil, dass die Handhaben an beiden Enden der Entriegelungshebel durch Ergreifen zwischen Daumen und Zeigefinger aufeinander zu bewegt werden können, um eine Entriegelung zu bewerkstelligen. Es versteht sich, dass der beschriebene Mechanismus auch in der Umkehrung wirksam sein kann, d.h. bei Auseinanderbewegen der Betätigungsabschnitte der Entriegelungshebel voneinander fort, wobei dann jedoch die Lage der Verriegelungsausnehmungen in den Ansätzen auf der gegenüberliegenden Seite des Hebelarms liegen.

Es ist auch denkbar, das Betätigungselement um seine Längsachse drehbar oder in einer anderen Ebene schwenkbar zu lagern, um das Verriegelungselement zu betätigen.

Die Erfindung wird nachfolgend anhand eines in Zeichnungen dargestellten Ausführungsbeispiels näher erläutert.
- Fig. 1: zeigt schematisch in Seitenansicht eine Schlitzeinheit und eine Leseeinheit nach der Erfindung.
- Fig. 2: zeigt einen Schnitt durch die Darstellung nach Fig. 1 entlang der Linie 2-2.
- Fig. 3: zeigt vergrößert die Einzelheit 3 der Darstellung nach Fig. 2.
- Fig. 4: zeigt vergrößert die Einzelheit 4 nach Fig. 2.

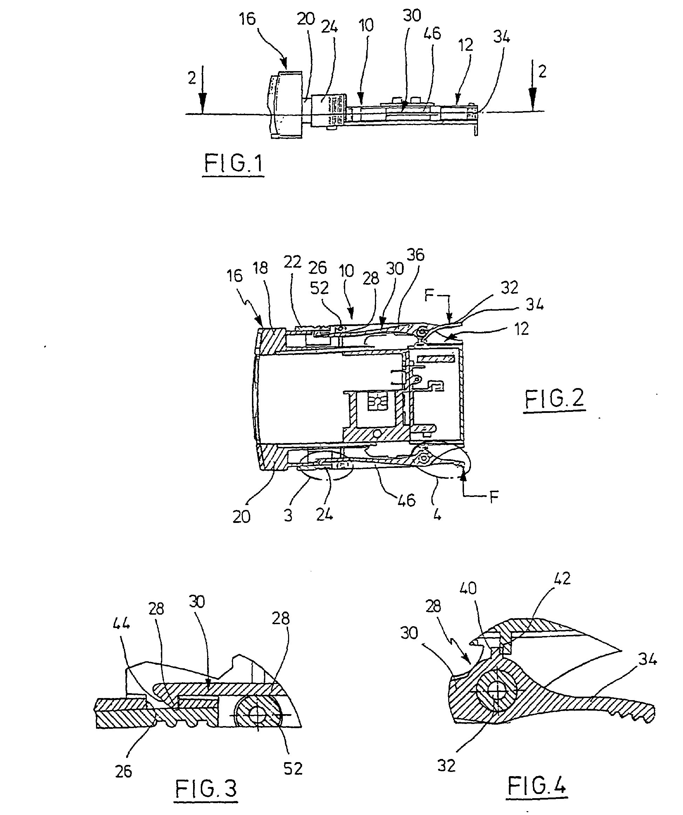

In Fig. 1 ist eine Leseeinheit 10 zu erkennen, von der Einzelheiten nicht beschrieben werden sollen. Sie enthält einen rahmenartigen Träger 12 für eine nicht gezeigte Leiterplatte und für eine Kontaktierungseinheit (nicht gezeigt), welche mit einer Chipkarte in Eingriff tritt, um mit dieser kommunizieren zu können. In Fig. 1 und 2 ist die Leseeinheit 10 mit einer Schlitzeinheit 16 zusammengebaut gezeigt, indem zwei nach hinten ragende Ansätze 18, 20 in Fassungsabschnitte 22, 24 eingesteckt sind. Wie aus Fig. 1 und 2 zu erkennen, ist zwischen der Rückseite der Schlitzeinheit 16 und den Fassungsabschnitten 22, 24 ein gewisser Abstand, der normalerweise von der Wand oder der Tür eines Automaten oder dergleichen eingenommen wird. Die Schlitzeinheit wird üblicherweise an der Vorderseite der Wand angeordnet, wobei die Ansätze 18, 20 durch eine Öffnung hindurch nach hinten geführt sind.

Die Ansätze 18, 20 sind im hinteren Bereich im Querschnitt rechteckig und hohl. Sie weisen an der Außenseite jeweils eine Verriegelungsausnehmung auf, in welche eine Verriegelungsnase 28 eines Entriegelungshebels 30 eingreift. Die Ansätze 18, 20 greifen annähernd passend in die Fassungsabschnitte 22, 24 ein, deren Querschnitt dementsprechend komplementär geformt ist.

Die Entriegelungshebel 30 sind um eine Achse 32 schwenkbar gelagert und weisen einen ersten Arm auf, der als Handhabe 34 ausgebildet ist. Der andere Arm 36 ist länger ausgebildet und dünner und reicht bis zur Verriegelungsnase 28, die einteilig mit dem Arm 36 geformt ist. Der Hebel 30 besteht aus einem geeigneten flexiblen Kunststoffmaterial.

Wie besser aus Fig. 4 hervorgeht, liegt ein Vorsprung 40 des Hebels 28 gegen einen Anschlag 42 an, der mit dem Träger der Leseeinheit 10 verbunden ist. Die Anordnung des Vorsprungs 40, der sich radial von der Drehachse 32 fort erstreckt, ist derart, dass die Verriegelungsnase 28 in Richtung Ausnehmung 26 vorgespannt ist. Diese Vorspannung wird dadurch erzielt, dass der Arm 36 des Hebels 30 als längliches Federelement ausgebildet ist und auch dann noch unter Spannung steht, wenn die Nase 28 vollständig in die Ausnehmung 26 eingreift. Wird die Schlitzeinheit mit den Ansätzen 18, 20 in die Fassungsabschnitte 22, 24 eingesteckt, läuft die Nase 28 an der Innenseite des zugeordneten Ansatzes 18 oder 20, nachdem sie zuvor über ihren rampenartigen Abschnitt 44 nach innen ausgelenkt wurde, bis die Nase 28 in die Ausnehmung 26 einschnappt. Auf diese Weise sind Leseeinheit 10 und Schlitzeinheit 16 verriegelt miteinander verbunden.

Soll eine Demontage erfolgen, wird durch Ergreifen der Handhaben 34 zwischen Daumen und Zeigefinger eine Kraft in Richtung F auf die Handhaben 34 ausgeübt. Der Hebelarm 36 legt sich dabei gegen einen festen Anschlag 52 und wird in dem Bereich zwischen Anschlag 52 und Drehachse 32 nach außen gebogen, wobei die Biegung noch dadurch verstärkt wird, dass an der Außenseite des ansonsten flachen Arms 36 eine Rippe 46 geformt ist, durch welche sicher gestellt ist, dass insbesondere der Bereich des Hebelarms 36 nahe dem Festpunkt oder Anschlag 52 besonders stark nach außen gebogen wird. Dadurch bewegt sich die Verriegelungsnase 28 aus der Ausnehmung 26 hinaus und die Leseeinheit 10 kann von der Schlitzeinheit 16 entfernt werden, welche in geeigneter Art und Weise mit der nicht gezeigten Wand eines Automaten oder dergleichen verbunden ist.

## Patentansprüche

1. Kartenlesevorrichtung, die an einer Wand angebracht werden kann, mit einer Schlitzeinheit (16), die einen Einsteckschlitz für eine Karte aufweist, in der eine Schlitzklappe verschwenkbar gelagert sein kann und die an der Wand befestigt ist und sich beidseitig der Wandöffnung erstreckt und einer zum Einsteckschlitz ausgerichteten Leseeinheit (10), in die die Karte eingeführt wird, wenn sie in den Einsteckschlitz eingeschoben wird und die einen Träger (12) aufweist, der an der Rückseite der Schlitzeinheit (16) angebracht ist und einer mit der Leseeinheit (10) verbundenen Steuereinheit, wobei die Schlitzeinheit (16) zwei sich durch die Wandöffnung erstreckende Ansätze (18, 20) aufweist, welche mit dem Träger (12) der Leseeinheit (10) eine lösbare Schnappverbindung bilden, wobei zwischen mindestens einem Ansatz (18, 20) und einem mit dem Ansatz (18, 20) teleskopisch zusammenwirkenden Abschnitt (22, 24) der Leseeinheit (10) ein federnd vorgespanntes Verriegelungselement (28) wirkt, das mit einem Verriegelungsabschnitt (26) zusammenwirkt, **dadurch gekennzeichnet, daß** seitlich an der Leseeinheit (10) ein längliches Betätigungselement (30) angeordnet ist mit einer hinteren Handhabe (34) zur Betätigung des Verriegelungselements zwecks Außereingriffbringens mit dem Verriegelungsabschnitt (26).

2. Lesevorrichtung nach Anspruch 1, **dadurch gekennzeichnet, dass** auf jeder Seite der Leseeinheit (10) ein Betätigungselement (30) angeordnet ist und jedes Betätigungselement (30) mit einem Verriegelungselement (28) für einen Ansatz (18, 20) bzw. einen Abschnitt (24, 26) der Leseeinheit (10) zusammenwirkt.

3. Kartenlesevorrichtung nach Anspruch 1 oder 2, **dadurch gekennzeichnet, dass** das Verriegelungselement (28) mit einer Ausnehmung (26) des Ansatzes (18, 20) zusammenwirkt.

4. Kartenlesevorrichtung nach einem der Ansprüche 1 bis 3, **dadurch gekennzeichnet, dass** das Verriegelungselement (28) einteilig mit einem Entriegelungshebel geformt ist, der nahe dem hinteren Ende schwenkbar (32) oder um seine Längsachse drehbar an der Leseeinheit (10) gelagert ist.

5. Kartenlesevorrichtung nach Anspruch 4, **dadurch gekennzeichnet, dass** der Entriegelungshebel mit seinem das Verriegelungselement (28) tragenden Arm als längliche Feder ausgebildet ist, die mit einem Gegenlager (52) der Leseeinheit (10) derart zusammenwirkt, dass die Feder bei Betätigung der Handhabe nach außen gebogen wird unter Wegschwenken des Verriegelungselements (28) aus der Ausnehmung.

6. Kartenlesevorrichtung nach Anspruch 5, **dadurch gekennzeichnet, dass** das Verriegelungselement (28) von einer Verriegelungsnase gebildet ist, die zum freien Ende hin eine Auflauframpe (44) aufweist.

7. Kartenlesevorrichtung nach Anspruch 5 oder 6, **dadurch gekennzeichnet, dass** die Vorspannung durch den federnden Arm des Entriegelungshebels erfolgt, der über zwei Anschläge (40, 42) an einem Verschwenken in der entgegengesetzten Richtung gehindert ist.

## Claims

1. A card reader device which can be installed on a wall, with a slot unit (16) having an insertion slot for a card, in which a slot flap can be pivotally mounted and which is fastened on the wall and extends on both sides of the wall opening, and a reading unit (10) directed towards the insertion slot, into which the card is introduced when it is thrusted into the insertion slot and which has a carrier (12), which is installed on the rear side of the slot unit (16), and with a control unit connected to the reading unit (10), wherein the slot unit (16) has two attachment pieces (18, 20) extending through the wall opening, which constitute a detachable snap-on connection with the carrier (12) of the reading unit (10), wherein between at least one attachment piece (18, 20) and a portion (22, 24) of the reading unit (10), telescopically cooperating with the attachment piece (18, 20), acts a spring-pretensioned locking element (28), which co-operates with a locking portion (26), **characterised in that** a longitudinal actuation element (30) is disposed laterally on the reading unit (10), with a rear manipulation equipment (34) for the actuation of the locking element in order to bring it out of engagement with the locking portion (26).

2. A reader device according to claim 1, **characterised in that** one actuation element (30) is disposed on each side of the reading unit (10) and each actuation element (30) co-operates with a locking element (28) for an attachment piece (18, 20) and a portion (24, 26), respectively, of the reading unit (10).

3. A card reader device according to claim 1 or 2, **characterised in that** the locking element (28) co-operates with a recess (26) of the attachment piece (18, 20).

4. A card reader device according to any one of claims 1 to 3, **characterised in that** the locking element (28) is formed in one piece with an unlocking lever, which is mounted pivotally (32) or turnably around its longitudinal axis on the reading unit (10) near to the rear end.

5. A card reader device according to claim 4, **characterised in that** the unlocking lever is realised with its arm carrying the locking element (28) as a longitudinal spring, which co-operates with a counter-bearing (52) of the reader unit (10) such that the spring is bent towards the outside upon actuation of the manipulation equipment, accompanied by swivelling away the locking element (28) out of the recess.

6. A card reader device according to claim 5, **characterised in that** the locking element (28) is constituted by a locking nose, which has a run-up ramp (44) towards the free end thereof.

7. A card reader device according to claim 5 or 6, **characterised in that** the pretension takes place through the springy arm of the unlocking lever, which is prevented from swivelling in the opposite direction by two stops (40, 42).

## Revendications

1. Dispositif de lecture de cartes pouvant être appliqué contre une paroi, comportant une unité à fente (16) qui présente une fente d'introduction pour une carte, dispositif dans lequel un clapet de fente peut être monté pivotant et qui est fixé à une paroi et s'étend des deux côtés de l'ouverture de la paroi et comportant une unité de lecture (10), orientée vers la fente d'introduction, dans laquelle est guidée la carte quand cette dernière est glissée dans la fente d'introduction, et qui présente un support (12), qui est appliqué sur la face arrière de l'unité à fente (16), et comportant une unité de commande reliée à l'unité de lecture (10), l'unité à fente (16) présentant deux pièces d'appuis (18, 20) s'étendant au travers de l'ouverture de paroi, lesquelles forment, avec le support (12) de l'unité de lecture (10), une liaison ouvrable à encliquetage, un organe de verrouillage (28) mis en tension préalable par ressort, agissant entre au moins une pièce d'appui (18, 20) et une partie (22, 24) de l'unité de lecture (10), qui agit en coordination télescopiquement avec la pièce (18, 20) cet organe de verrouillage (28) agissant en coordination avec une pièce de verrouillage (26),
**caractérisé en ce que**, latéralement par rapport à l'unité de lecture (10), est disposé un organe d'actionnement allongé (30), comportant une poignée arrière (34) pour actionner l'organe de verrouillage dans le but de libérer la pièce de verrouillage (26).

2. Dispositif de lecture suivant la revendication 1, **caractérisé en ce que**, de chaque côté de l'unité de lecture (10), est disposé un organe d'actionnement (30) et **en ce que** chaque organe d'actionnement (30) agit en coordination avec un organe de verrouillage (28) pour une pièce d'appui (18, 20) ou un raccord (24, 26) de l'unité de lecture (10).

3. Dispositif de lecture de cartes suivant la revendication 1 ou 2, **caractérisé en ce que** l'organe de verrouillage (28) agit en coordination avec un évidement (26) de la pièce d'appui (18, 20).

4. Dispositif de lecture de cartes suivant l'une des revendication 1 à 3, **caractérisé en ce que** l'organe de verrouillage (28) est formé en une seule pièce avec un levier de déverrouillage, qui est monté contre l'unité de lecture (10), pivotant (32) ou tournant autour de son axe longitudinal, au voisinage de l'extrémité arrière.

5. Dispositif de lecture de cartes suivant la revendication 4, **caractérisé en ce que** le levier de déverrouillage, avec son bras portant un organe de verrouillage (28), est réalisé sous la forme d'un ressort longitudinal, qui agit en coordination avec un contre-palier (52) de l'unité de lecture (10), de telle façon que le ressort, lorsqu'on actionne la poignée, est plié vers l'extérieur en écartant par pivotement l'organe de verrouillage (28) de l'évidement.

6. Dispositif de lecture de cartes suivant la revendication 5, **caractérisé en ce que** l'organe de verrouillage (28) est formé d'un nez de verrouillage qui présente, vers son extrémité libre, une rampe d'introduction (44).

7. Dispositif de lecture de cartes suivant la revendication 5 ou 6, **caractérisé en ce que** la tension préalable se fait par le bras à ressort du levier de déverrouillage, dont un pivotement dans la direction opposée, est empêché par deux butées (40, 42).
